# EUROPEAN PATENT APPLICATION

(11) **EP 3 336 282 A1**
(43) Date of publication of application: **20.06.2018**
(21) Application number: 17203722.8
(22) Date of filing: 27.11.2017
(51) Int. Cl.: E04H 9/02, F16F 7/12

(54) **ANTISEISMIC DISSIPATOR DEVICE**

(30) Priority: 16.12.2016 IT 201600127520
(71) Applicant: Olearo, Bruno, 15073 Castellazzo Bormida (AL) (IT)
(72) Inventor: Olearo, Bruno, 15073 Castellazzo Bormida (AL) (IT)
(74) Representative: Postiglione, Ferruccio

(57) **Abstract**

It is described an antiseismic dissipator device (1) comprising: a first longitudinally extending body (2) having a first end (8) to be fixed to an outer structure; a plurality of first interfering elements (13) supported by the first body (2); a second longitudinally extending body (4) having a second end (5) to be fixed to the outer structure; the second body (4) being telescopically coupled to the first body (2); a plurality of second interfering elements (26) supported by the second body (2) and configured to interfere with the first interfering elements (13; 26) and to produce an energy dissipation during a relative motion of the first body (2) with respect to the second body (4).

## Description

### TECHNICAL FIELD

The present invention refers to passive-type antiseismic dissipator devices.

### PRIOR ART

As it is known, the passive protection by dissipation consists of providing a structure with the capability of dissipating a substantial fraction of the shaking energy induced by an earthquake, without damaging the structural elements dedicated to the vertical load-carrying capacity.

The main known types of dampers, by which it is possible to increase an energy dissipation, are those known as:
1. Metallic Yield Dampers;
2. Friction Dampers;
3. Visco-Elastic Dampers;
4. Viscous Fluid Dampers;
5. Metallic shear panels.

With reference to the gravity of the seismic effects, it is observed that, for example, it is deeply felt a problem typical of the industrial warehouses wherein metal or concrete beams simply abut on pillars, and the stability thereof relies only to their own weight.

### SUMMARY

The Applicant has perceived the need of proposing an antiseismic dissipator device which is both efficient and simultaneously not particularly complex and expensive.

The Applicant has felt that it is possible to satisfy such needs by a dissipator device as defined in independent claim 1. Preferred embodiments are defined in dependent claims from 2 to 10.

### BRIEF DESCRIPTION OF THE FIGURES

Some exemplifying non-limiting embodiments will be described in the following with reference to the attached figures, wherein:
Figure 1 schematically shows a cross-section along a longitudinal plane of a first embodiment of an antiseismic dissipator device provided with first interfering elements and second interfering elements;
Figure 2 shows a plate for supporting the first interfering elements, useable in said dissipator device, with a lateral view (Figure 2a) and with a cross-section along the plane A-A (Figure 2b);
Figure 3 shows a detail of the cross-section in Figure 1;
Figure 4 schematically shows the arrangement of the first interfering elements in said supporting plate;
Figure 5 shows an alternative embodiment of the first interfering elements;
Figure 6 is a cross-section of a plurality of second interfering elements;
Figure 7 shows, by a lateral view, the second interfering elements being in the shape of rings having a frusto-conical cross-section;
Figure 8 shows, with a lateral view, the second interfering elements having the shape of a thread;
Figure 9 is another detail of the cross-section in Figure 1;
Figure 10 refers to a particular non-limiting example of an application of the dissipator device to a beam-pillar structure;
Figure 11 exemplifyingly shows the dissipator device during three different operative steps;
Figure 12 is a cross-section of the second interfering elements as deformed by the first interfering elements;
Figure 13 shows said supporting plate in different dissipating configurations, based on the number of the used first interfering elements;
Figure 14 shows another embodiment of the dissipator device having a structure consisting in plural modules;
Figure 15 shows the dissipator device in an embodiment alternative to the ones of the preceding figures with reference to the mode by which the first interfering elements are supported;
Figure 16 shows the dissipator device in an embodiment providing to reciprocally position the first and second interfering elements, alternative to the one of the preceding figures;
Figure 17 shows experimental curves indicative of the axial force vs. displacement, with reference to a dissipator device subjected to load tests;
Figure 18 shows a further experimental curve indicative of the axial force vs. displacement.

### DETAILED DESCRIPTION

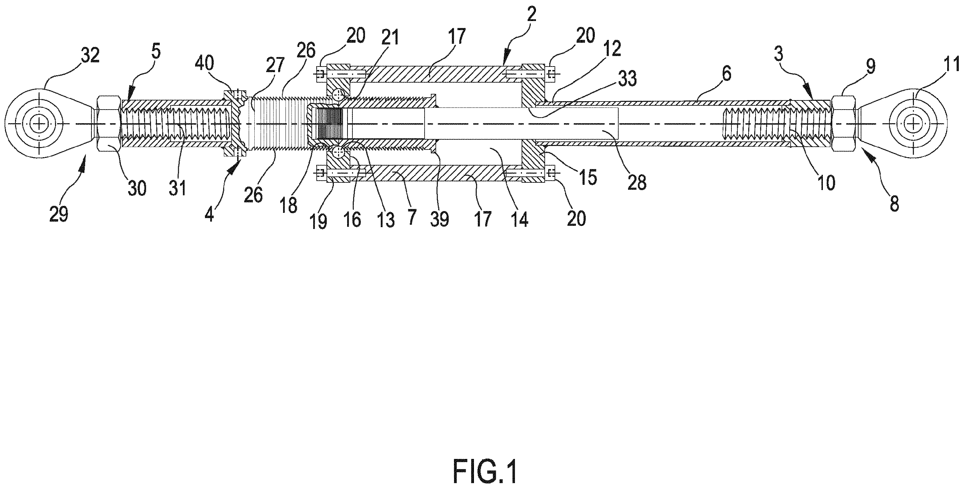

Figure 1 schematically shows a first embodiment of an antiseismic dissipator device 1. As it will be illustrated in the following, the antiseismic dissipator device 1 can be used for preserving buildings, bridges, viaducts, or any other structure, by modifying the response thereof to a seismic action or to other dynamic actions (wind or actions determined by thermal expansions, for example). The term "antiseismic" comprises also the protection from dynamic actions different from the seismic one such as, for example, wind or actions correlated to thermal variations.

The antiseismic dissipator device 1 comprises a longitudinally extending first body 2, having a first end 3 to be fixed to an outer structure (not shown) and a second body 4, also longitudinally extending, having a second end 5 to be fixed to the outer structure. The second body 4 is telescopically coupled to the first body 2 and, according to the example in Figure 1, the second body 4 is inside the first body 2.

The first body 2 supports a plurality of first interfering elements 13 and, according to the example, defines a cavity 14 in which the second body 4 is introduced.

For example, the first body 2 comprises a first portion 6 and a second portion 7 integral with the first portion 6. The first portion 6 has a cylindrical shape and the first fixing end 3 thereof is provided with first means 8 to be fixed to the outer structure. According to a specific example, such first fixing means 8 are a bolt comprising a first nut 9 and a first screw 10 particularly provided with a first hooking ring 11. According to this example, the first fixing end 3 is internally threaded (particularly with a left thread) for being coupled to the first screw 10.

The end 12 of the first portion 6, opposite to the first fixing end 3, is integral with the second portion 7. According to the considered example, the second portion 7 comprises at least one first supporting plate 15 proximate to the first portion 6 and at least one second supporting plate 16 distanced from the first supporting plate 15 by means of a plurality of supporting bars 17.

The first and second supporting plates 15 and 16 extend, for example, normal to a longitudinal axis x of the dissipator device 1. The first supporting plate 15 is drilled and defines a first central hole 33 and the second supporting plate 16 is also drilled and defines a second central hole 18, in which the second body 4 slides.

Referring to the described example, the first and second supporting plates 15 and 16 are made by two respective discs drilled in the corresponding central areas. Moreover, according to the considered example, the first and second supporting discs 15 and 16 exhibit first through holes 19 for fixing screws 20, to be screwed inside the supporting bars 17.

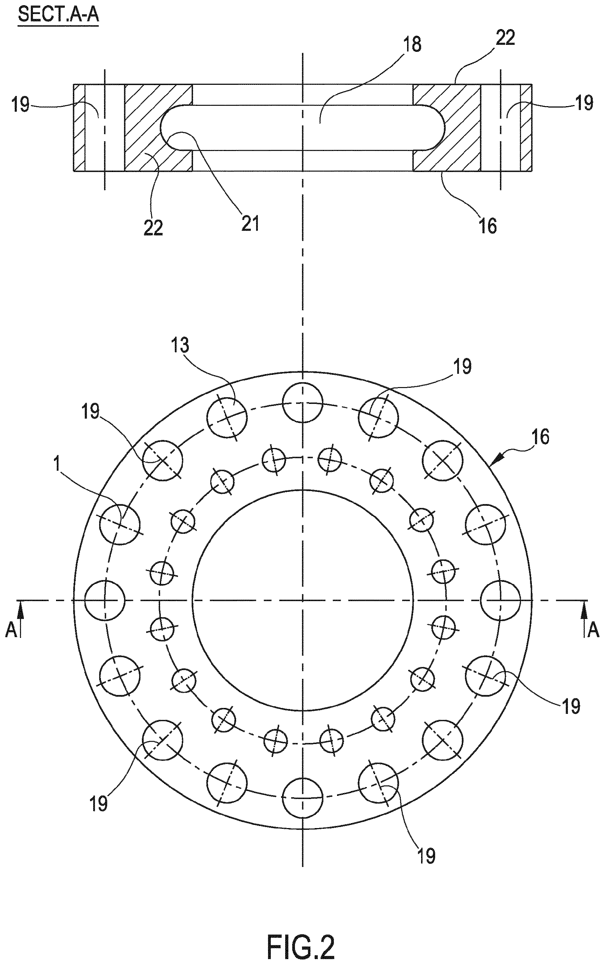

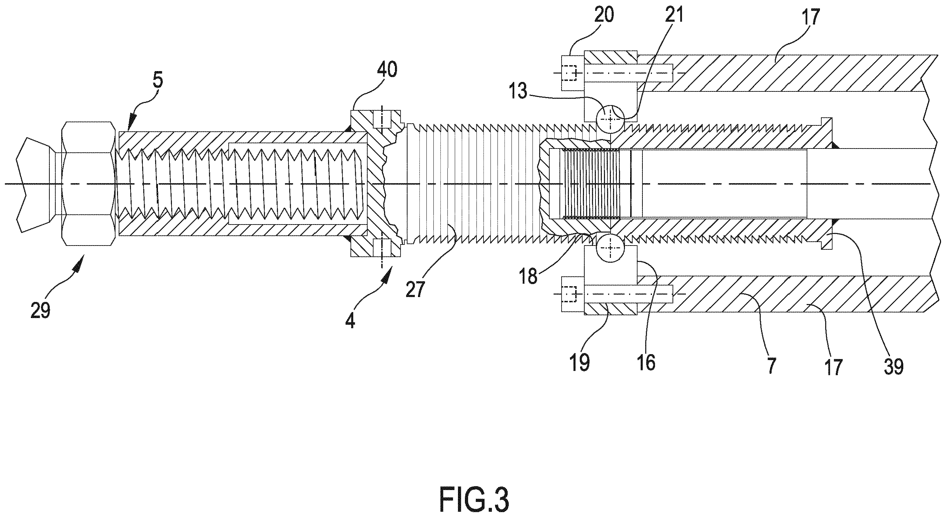

According to a particular embodiment example, the second supporting disc 16 acts as a support for the plurality of the first interfering elements 13. For this matter, it is made also reference to Figures 2 and 3.

Specifically, the second supporting disc 16 is provided with a seat 21 (Figure 2b) configured for containing the first interfering element 13. Such seat 21 is, for example, a groove formed in the internal part of the second supporting disc 16, and shaped for holding the first interfering elements 13 so that they project towards the second central hole 18.

As shown in Figure 2, the second supporting disc 16 is provided with second through holes 22 for locking stakes or pins which prevent the interfering elements 13 from sliding inside the groove 21.

It is observed that the body 2 is made of metal and, preferably, the first 15 and second supporting discs 16 are made of steel.

With reference to the interfering elements 13, these are, for example, single stiff units independent from each other. According to a first embodiment, each element 13 is a metal ball, for example, of steel and, preferably, of carbon steel.

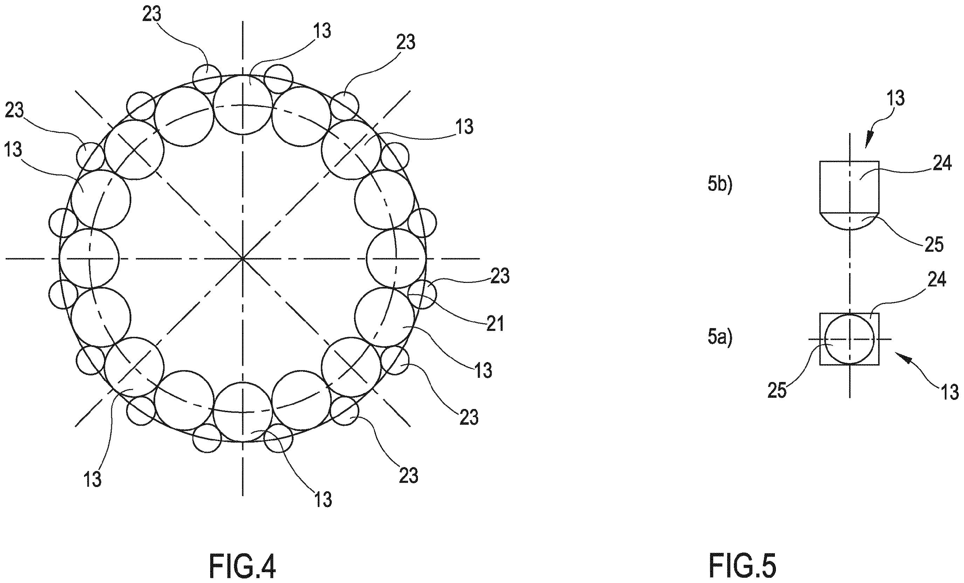

Figure 4 shows an exemplifying general outline of the arrangement of the first interfering elements 13 inside the groove 21 of the second supporting disc 16. Particularly, such interfering elements 13 are disposed diametrically symmetrically inside the circular cross-section groove 21 of the second supporting disc 16: each interfering element 13 faces another interfering element 13 lying along the same diameter.

Figure 4 shows also the locking pins, indicated by 23, which prevent the interfering balls 13 from circumferentially rolling. The locking pins 23, tangentially contacting an internal portion of the interference balls 13, also exert a radial thrust action on the balls themselves, in this way the interference effect is amplified.

It is observed that, according to an alternative embodiment, the first interfering elements 13 can exhibit, as shown in Figure 5, a parallelepiped shape 24 (a cubic shape, for example) to be inserted into the (suitably shaped) groove 21 and a hemispheric portion 25 which, at least partially, projects towards the second central hole 18 of the second supporting disc 16.

With reference to the second body 4 (Figure 1), which supports a plurality of second interfering elements 26 configured for interfering with the first interfering elements 13 and for producing a dissipation of energy during a relative motion of the first body 2 with respect to the second body 4.

According to the described embodiment, the second body 4 comprises an interfering portion 27, for example having a cylindrical shape, provided with an end radiused to the second fixing end 5 and an opposite end radiused to a guiding portion 28.

The second fixing end 5, for example analogous to the first fixing end 3, is provided with second means 29 to be fixed to the outer structure. According to a particular example, such second fixing means 29 are a further bolt comprising a second nut 30 and a second screw 31 (with a right thread) provided, particularly, with a second hooking ring 32. According to this example, the second fixing end 5 is threaded inside for being coupled to the second screw 31.

The guiding portion 28 has a cylindrical shape and is sized for sliding inside the cavity 14 and also for passing through the first central hole 33 of the first supporting plate 15. Such guiding portion 28 has a diameter less than the interfering portion 27 with which is integral.

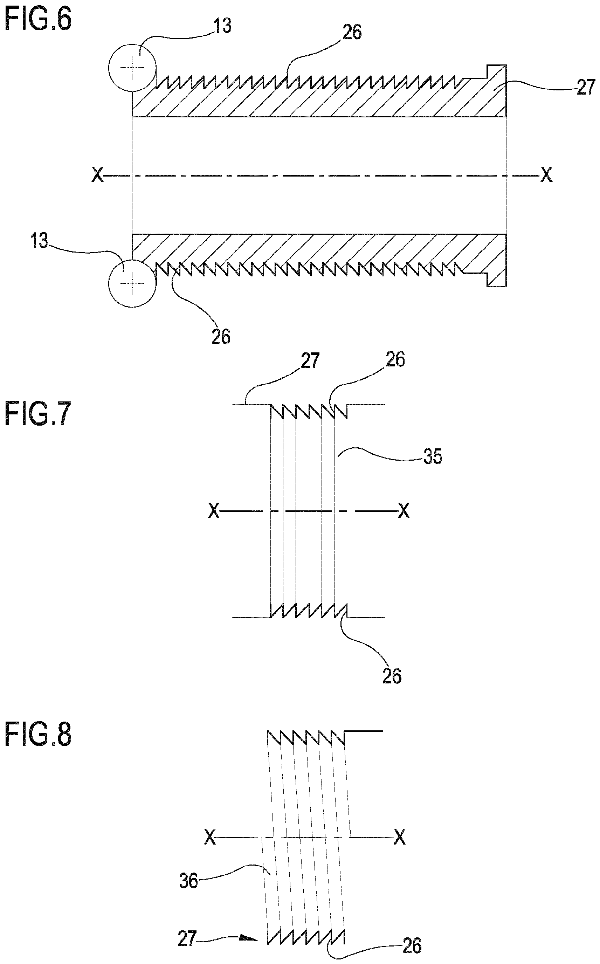

The interfering portion 27 is provided on the outer face thereof with second interfering elements 26. According to a first example, each interfering element 26 is a metal blade extending transversal to the longitudinal axis x of the dissipator device 1, as shown in the cross-section in Figure 6.

It is observed that the metal blades 26 are integral with the interfering portion 27 and can be in the shape of rings 35 independent from each other, as shown in Figure 7, or can form a continuous thread 36 as shown in Figure 8. For example, the metal blades 26 are shaped in order to have a frusto-conical cross-section shape. As illustrated in Figures 7 and 8, each frusto-conical wall 26 is oriented so that the relative diameter increases, for example, from the left to the right. As an alternative, the metal blades 26 can have a serrated cross-section.

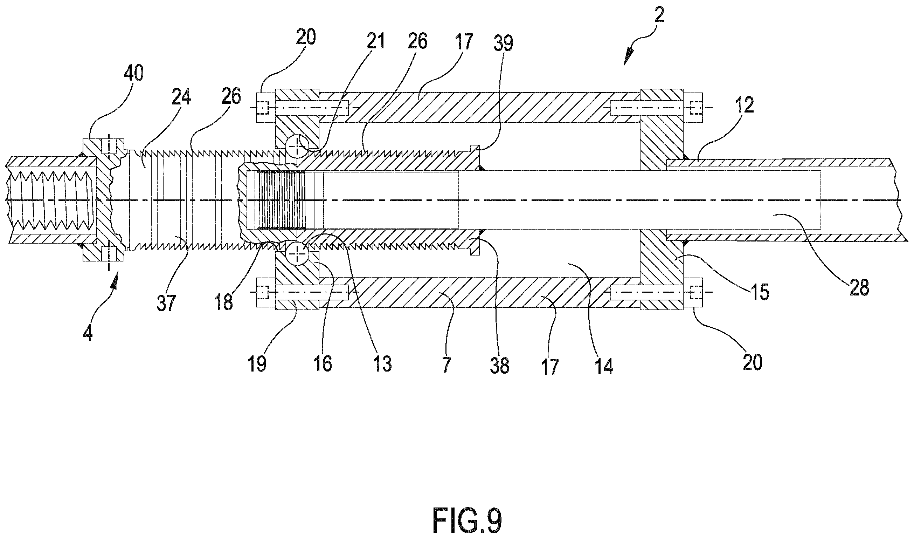

According to an example shown also in Figure 9, which illustrates a portion of the dissipator device 1, the interfering portion 27 comprises a first interfering portion 37 (at the left, for example) and a second interfering portion 38 (at the right) separated by a circumferential slot formed in the interfering portion 27 itself, in which the free ends of the first interfering elements 13 project.

On the first interfering portion 37, the frusto-conical or serrated shaped metal blades 26 are oriented oppositely to the frusto-conical or serrated shaped metal blades 26, which are located on the second interfering portion 38.

The dissipator device 1 is implemented so that during the reciprocal movement of the first body 2 and second body 4, the second body 4 moves inside the first body 2, towards the right or towards the left with reference to the initial position of Figures 1 and 9. During this movement, the first interfering elements 13 interfere with the second interfering elements 26 (which are disposed on the first or second interfering portions 37 and 38): such interference causes an energy dissipation, and particularly, the second interfering elements 26 are plastically deformed.

The interfering portion 27 and, particularly, the metal blades 26, are preferably made of steel, such as for example PR 80 steel.

Moreover, the interfering portion 27 exhibits means for limiting the stroke of the second body 4 inside the first body 2, obtained, for example, by suitably dimensioning an associated first end 39 and second end 40.

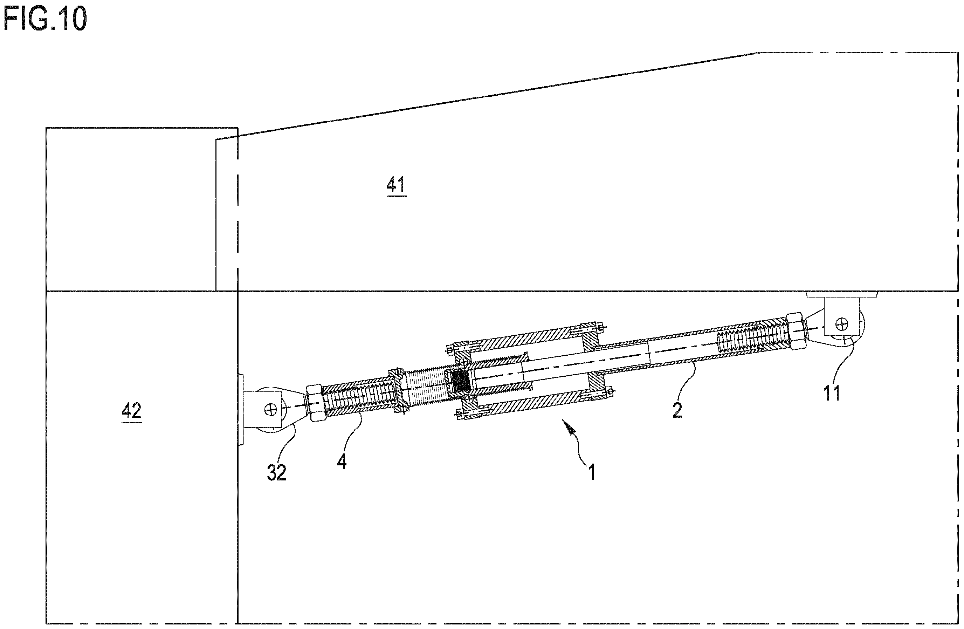

Figure 10 refers, in an exemplifying and non-limiting type, to the installation of the dissipator device 1. According to this non-limiting example, the dissipator device 1 is used for dissipating the seismic energy of a building structure such as for example a structure formed by a beam 41 abutting on two pillars 42, without fixing means. Such type of structure is typically used in industrial warehouses.

Particularly, the dissipator device 1 exhibits the first hooking ring 11 fixed to the beam 41 (in proximity of an end of this latter) and the second hooking ring 32 fixed to the pillar 42. Moreover, it is provided another dissipator device 1 (not shown) fixed to another end of the beam 41 and to another pillar on which the beam itself abuts.

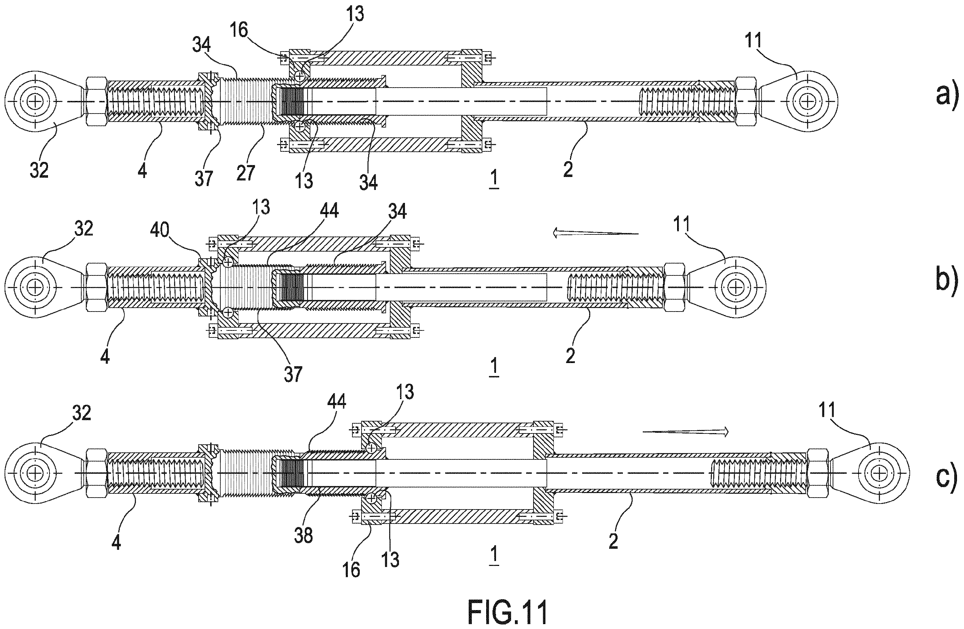

With reference to the operation of the dissipator device 1, it is made reference to Figure 11. The dissipator device 1 can be implemented for example according to two different dissipation way. The first way is called "fusible": according to such way, the parts deformed are substituted after each seismic event; the assembly of this device is particularly economical. The second way is called "permanent dissipator": in this case a dissipation is constantly in progress for long periods of time, for example for decades, without requiring any maintenance.

Figure 11a shows the dissipator device 1 in an initial installed position. In this initial position, the second supporting disc 16 is placed at a central area of the interference region 27 where the metal blades 26 are present.

It is assumed that a seismic shock or another phenomenon (wind, for example) causes the dissipator 1 to switch to the configuration in Figure 1b, wherein the first hooking ring 11 is displaced towards the second hooking ring 2 so that the metal balls are moved in proximity of the second end 40. In other words, there is a thrusting action on the dissipator device 1.

During the displacement from the configuration in Figure 11a to the one in Figure 11b, the metal balls 13 interfere with the metal blades 26 so that they are plastically deformed.

In this plastic deformation, there is an energy dissipation which acts on the structure formed by the pillar 42 and beams 41. It is observed that during the action of the metal balls 13 on the metal blades 26, the metal balls themselves do not rotate but act as sliding interfering elements.

Particularly, with reference to the dissipation occurring during this first stroke, from the configuration in Figure 11a to the one in Figure 11b, the metal blades 26 which are supported by the first interfering portion 37 (at left in Figure 11) of the second body 4, are deformed.

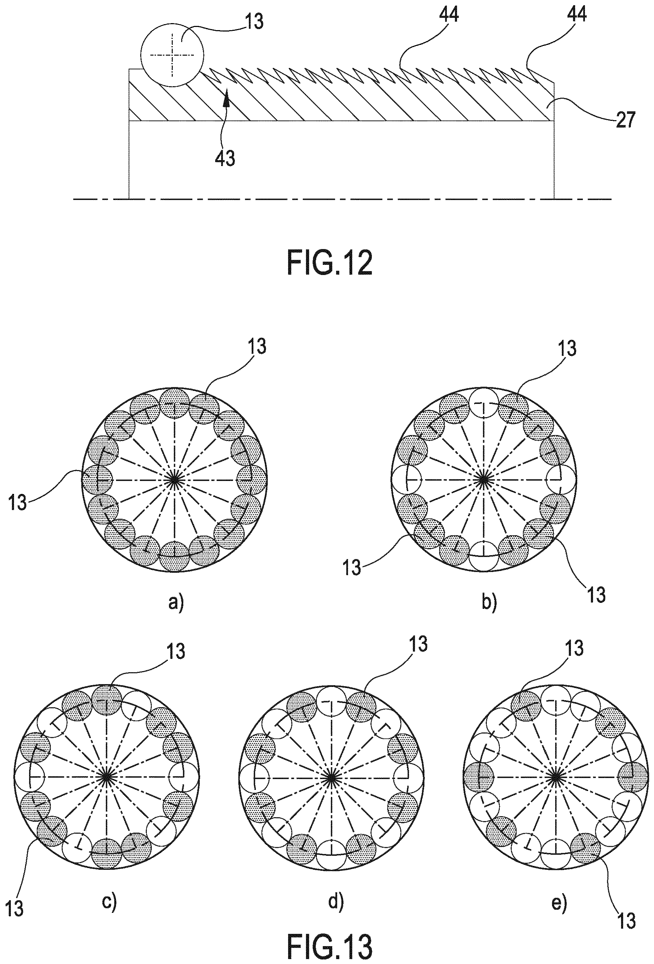

Each metal ball 13 which deforms the metal blades 26 by crushing and partially stretching them, forms on the first interfering portion 37 an associated groove 43 in which the metal blades 26 are crushed and partially overlapped on each other in order to form discontinuities 44, as schematically shown in Figure 12.

In a second stroke, from the configuration in Figure 11b to the one in Figure 11c (pulling action), the first hooking ring 11 moves away from the second hooking ring 2 so that the metal balls 13 interfere with those blades 26 which are disposed on the second interfering portion 38 (at right, in Figure 11). Also during this second stroke, there are the plastic deformation and the associated energy dissipation as described with reference to the first stroke.

When all the metal blades 26 of the first interfering portion 37 and of the second interfering portion 38 are deformed during the reciprocal movement from Figure 11a to Figure 11c, the dissipator device 1 operates according to the fusible way because has fulfilled a primary purpose of the dissipative capacity thereof.

With reference to this fusible way, after a first cycle including the first and second strokes, the dissipative parts of the dissipator device 1 are for example substituted (such as the interfering portion 27). For example, the dissipator device 1 of the fusible way, is particularly adapted for beam-pillar applications with loads from 20 to 110 kN.

It is worth noting that the dissipator device 1 also after the first operative cycle, when it operated in a fusible way, exhibits a residual dissipative capacity due to the sliding friction between the metal balls 13 and discontinuities 44 which are formed after the primary plastic deformation. This sliding friction enables again to dissipate the energy associated to the movement of the structure to which the dissipator is fixed, and therefore it can be re-used. In this case, the dissipator device after being employed in the fusible way, is also still useable in the permanent dissipation way.

With reference to the actual permanent dissipation way, the dissipator device 1 is used with the metal blades 44 which are already crushed and deformed, and therefore in the configuration of Figure 12. In this case, the first deformation is performed during the step of assembling the dissipator device 1 which is then installed with the deformed metal blades 44, as a result of the first work cycle. The dissipator device 1 in the permanent dissipation way, can operate both by thrusting and pulling because the metal balls 13 always interfere with the deformed metal blades 44. Such dissipator device 1 can exert its dissipative capacity against many seismic shocks, also for decades and is preferably useable in buildings having loads from 100 to 400 kN. It is also observed that the dissipator device 1 exhibits a strong sensitivity which therefore enables to be used also in buildings subjected to thermal expansions or to the action of winds.

With reference to some possible embodiments alternative to the ones described hereinbefore, it is observed that it is possible to adjust the load to be dissipated by acting on the number of the first interfering elements 13 disposed in the groove 21 (Figures 1, 2 and 4) present in the second supporting disc 16.

By considering the metal balls 13, it is possible to provide empty positions inside the groove 21, as shown in Figure 13, in which the used metal balls are represented in black, while the empty seats are represented in white. The metal balls 13 are positioned for being diametrically opposite and therefore have an oppositely equal thrust on the metal blades 26.

With reference to the maximum range of the dissipator device 1, for example, are valid the following values:
- Figure 13a: sixteen installed balls, maximum load equal to 100 kN;
- Figure 13b: twelve installed balls, maximum load equal to 75 kN:
- Figure 13c: ten installed balls, maximum load equal to 62.5 kN;
- Figure 13d: eight installed balls, maximum load equal to 50 kN;
- Figure 13e: six installed balls, maximum load equal to 37.5 kN.

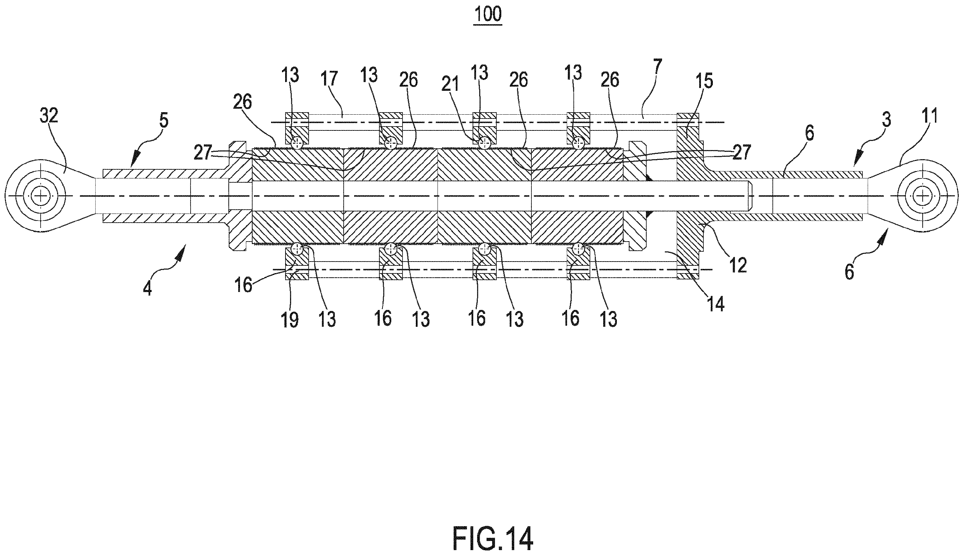

Figure 14 shows an antiseismic dissipator device consisting of multiple modules 100 (particularly of a permanent dissipation type), which implements a further embodiment of the dissipator device 1. The multiple modules dissipator device 100 exhibits a plurality of dissipation stages and therefore the first body 2 is provided with a plurality of second supporting plates 16, each having a corresponding plurality of first interfering elements 13. Moreover, the second body 4 is provided with a plurality of interfering portions 27, each being provided with corresponding second interfering elements 26.

The modules dissipator device 100 can be used for operating both in the fusible way and in the permanent dissipation way. Using a number of second supporting plates 16 greater than one enables to increase the overall dissipation capacity.

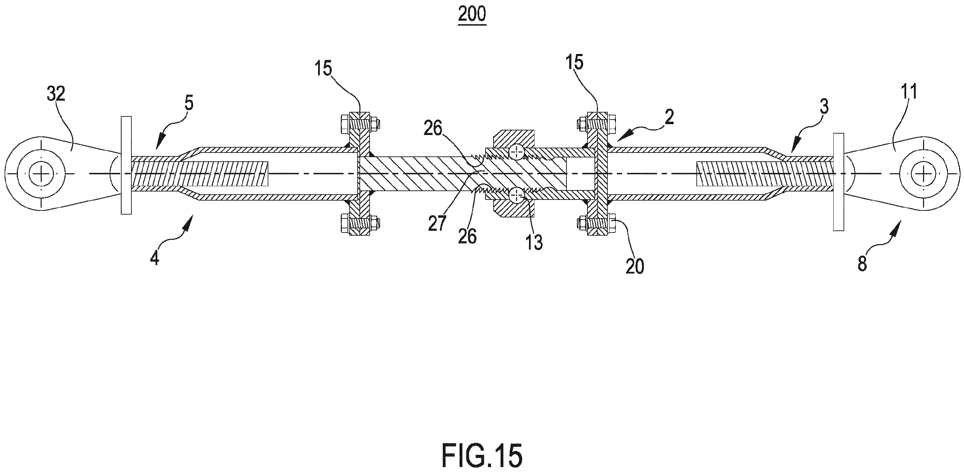

Figure 15 shows a further antiseismic dissipator device 200 which implements another embodiment of the dissipator device 1. According to this embodiment, the first body 2 is provided with a supporting sleeve 47 structured for housing the first interfering elements 13, which is fit on the interfering portion 27.

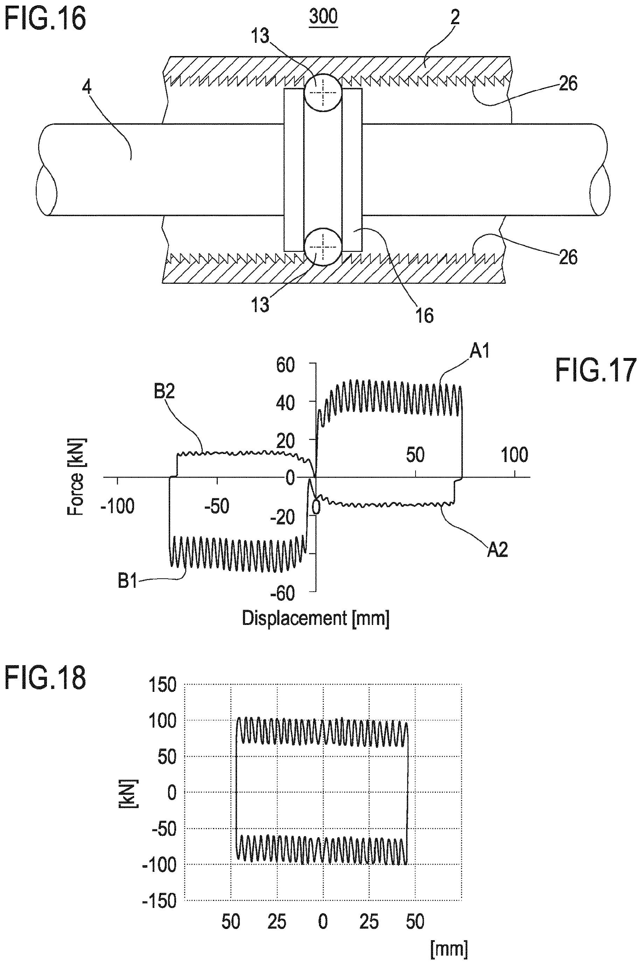

Figure 16 refers to an embodiment, indicated with 300, of the antiseismic dissipator device wherein, with respect to the beforehand described embodiments, the first interfering elements 13 (the metal balls, for example) are supported by the second body 4. In this case, the second interfering elements 26 (the metal blades, for example) are supported on the inner face of the first body 2 and the first interfering elements 13, which are placed inside the cavity 14 of the first body 2, are such to exert opposite thrusts on the second interfering elements 26 which externally surround them.

The Applicant has done several experimental tests by using a dissipator device analogous to the one in Figure 1. Particularly, among the several tests, a "low speed" test was performed, in the following the parameters of such test are listed:
- Amplitude of the displacement [mm]: ± 75.00
- Number of cycles: 1
- Frequency [Hz]: 0.005
- Speed [mm/s]: 1.5

Therefore, the dissipator device 1 was subjected to a tensile and compression stress according to a ramp waveform. Figure 17 shows the trend of the applied axial stress vs. the displacement of the dissipator device 1.

Curve A1 shows the loads corresponding to the tensile deformations of the metal blades, while curve A2 corresponds to the residual dissipation, by sliding friction, caused by the interference between the metal balls and the already deformed metal blade. Curves B1 and B2 show the comparison between the curves A1 and A2 during the compression/dissipation step.

Figure 18 shows another experimental curve (axial stress expressed in kN, vs. the displacement in mm) obtained by a dissipator device according to the invention; the purpose of this figure is to visually stress the dissipation differences between the fusible way and the permanent dissipation one.

The above described antiseismic dissipator devices are very advantageous because they are not particularly complex or expensive to manufacture, while obtaining excellent performances. The possibility of adding or removing the first dissipating elements 13 enables to suitably size the range and the effect of the dissipation. Specifically, the presence of a primary dissipative effect and of an ensuing secondary effect, enables to substantially extend the service life of the device. Moreover, in addition the possibility of making a plural module structure, of a type shown in Figure 14, provides flexibility when sizing and enables to obtain very high ranges.

### LIST OF THE NUMERAL REFERENCES OF THE FIGURES

- antiseismic dissipator device 1
- longitudinal axis x
- first body 2
- first fixing end 3
- second body 4
- second fixing end 5
- first portion 6
- second portion 7
- first fixing means 8
- first nut 9
- first screw 10
- first hooking ring 11
- end 12
- first interfering elements 13
- cavity 14
- first supporting plate 15
- second supporting plate 16
- supporting bars 17
- second central hole 18
- through holes 19
- fixing screws 20
- seat 21
- second through holes 22
- locking pins 23
- parallelepiped shaped portion 24
- hemispheric portion 25
- second interfering elements 26
- interfering portion 27
- guiding portion 28
- second fixing means 29
- second nut 30
- second screw 31
- second hooking ring 32
- first central hole 33
- rings 35
- continuous thread 36
- first interfering portion 37
- second interfering portion 38
- first end 39
- second end 40
- abutting beam 41
- pillar 42
- groove 43
- discontinuity 44
- assemblies 45
- smooth cylindrical portions 46
- supporting sleeve 47.

## Claims

1. Antiseismic dissipator device (1, 100, 200, 300) comprising:
a first longitudinally extending body (2) having a first end (3) to be fixed to an outer structure;
a first plurality of interfering elements (13; 26) supported by the first body (2);
a second longitudinally extending body (4) having a second end (5) to be fixed to the outer structure; the second body (4) being telescopically coupled to the first body (2);
a first plurality of second interfering elements (26; 13) supported by the second body (2) and configured to interfere with the first interfering elements (13; 26) and for producing a dissipation of energy during a relative motion of the first body (2) with respect to the second body (4).

2. Device according to claim 1, wherein the first elements (13) are such to produce the energy dissipation by plastic deformation of the second elements (26) when they interact with the first elements (13).

3. Device according to claim 1, wherein the first and second elements (13, 26) are such to produce the energy dissipation by the sliding friction.

4. Device according to claim 1, wherein the device is such to take:
- a first operative configuration wherein the first and second elements (13, 26) are such to produce the energy dissipation by the plastic deformation of the second elements (26) when they interact with the first elements (13);
- a second operative configuration wherein the second elements (26, 44), deformed by interacting with the first elements (13), are such to produce further energy dissipation by the sliding friction with the first elements (13).

5. Device according to claim 1, wherein each of the first elements (13) is provided with a portion (25) having a hemispheric shape for interfering with the second elements (26).

6. Device according to at least claim 1, wherein the second elements (26) are metal blades (35, 36) arranged on a face of the second body (4) having a longitudinal axis (x).

7. Device according to claim 2, wherein the metal blades transversally project from a longitudinal axis (x) of the second body (4); said blades being deformable by the first elements in order to be compressed on a face of the second body (4).

8. Device according to claims 3 and 7, wherein said compressed metal blades (26, 44) are partially overlapped in order to form discontinuities.

9. Device according to claim 1, wherein:
the first elements (13) are stiff elements separable from each other and housed in a supporting groove in order to form an annulus around a longitudinal axis of the device (x);
the second body (4) is cylindrical having said longitudinal axis and the second elements (26) are arranged on a face of the second body (4) in order to occupy a cylindrical area of the second body.

10. Device according to at least one of the preceding claims, wherein said device is useable according to:
a fusible way wherein the first interfering elements (13) are configured for interfering with the second undeformed interfering elements (26) and the substitution of the second interfering elements after their deformation (44) is required; or
a permanent way in which the first interfering elements (13) are configured for interfering with the second already deformed interfering elements (44).
